# EUROPEAN PATENT APPLICATION

(11) **EP 4 808 038 A1**
(43) Date of publication of application: **16.09.2026**
(21) Application number: 25163432.5
(22) Date of filing: 13.03.2025
(51) Int. Cl.: H04L 9/00

(54) **SECURE QUERY PROCESSING AND DATA ANALYTICS USING HOMOMORPHIC ENCRYPTION**

(71) Applicant: Robert Bosch GmbH, 70442 Stuttgart (DE)
(72) Inventor: Bor Bor Yalame, Mohammadhossein, 64289 Darmstadt (DE); Boesch, Christoph, 72138 Kirchentellinsfurt (DE)

(57) **Abstract**

A computer-implemented method for generating a homomorphic encryption code of a query, comprising identifying at least one first operation in the query; assigning a first homomorphic encryption scheme to the at least one first operation based on an optimization of a total computational cost of executing the homomorphic encryption code to be generated, wherein the first homomorphic encryption scheme is chosen to be either a Boolean homomorphic encryption scheme or an arithmetic homomorphic encryption scheme or one of one or more further homomorphic encryption schemes; and generating, using a homomorphic encryption framework, the homomorphic encryption code of the query based on assigning the first homomorphic encryption scheme.

## Description

### Background

Homomorphic Encryption (HE) is a non-interactive cryptographic technique making it particularly suitable for the automotive industry where Wide Area Network (WAN) settings require non-interactive solutions. In such environments, the ability to perform secure computations without continuous communication between parties is crucial and HE provides a viable solution by allowing computations over encrypted data without interaction.

Homomorphic encryption is a form of encryption that allows computations to be performed on encrypted data without first having to decrypt it. The resulting computations are left in an encrypted form which, when decrypted, result in an output that is identical to that of the operations performed on the unencrypted data.

Several prior works have explored the automation of secure computations and the application of homomorphic encryption (HE) in data processing. The following are notable contributions in this area:
- Silph is a framework that automatically compiles programs written in a high-level language to optimized, hybrid secure multi-party computation (MPC) protocols. Silph focuses on optimizing MPC by mixing multiple MPC primitives securely and efficiently, formulating the protocol assignment as an optimization problem using integer linear programming (ILP). However, Silph operates exclusively in the MPC domain and does not address HE. In particular, it does not provide automation for translating SQL queries into secure computation protocols.
- HEIR (heir.dev) is a project developed by Google that provides a compiler framework designed for homomorphic encryption. It standardizes intermediate representations related to HE, enabling compiler engineers to build upon. HEIR (heir.dev) focuses on one type of (Boolean or arithmetic) HE compilers and transforms plaintext programs into HE-friendly dialects, applying HE-specific optimizations. However, HEIR (heir.dev) relies on domain-specific languages and requires developers to write programs in specific formats, limiting accessibility for those accustomed to e.g. standard SQL. Furthermore, HEIR (heir.dev) focuses on either arithmetic circuits or Boolean circuits (but not both) and lacks optimized handling of Boolean operations. It does not fully automate the translation of standard SQL queries into HE code.
- HEIR (which is another project as compared to HEIR (heir.dev)) introduces a compiler framework that automates code generation over multiple HE schemes. It addresses the usability-efficiency dilemma in HE programming by introducing multi-level intermediate representation (IR) dialects tailored for HE. However, although HEIR allows developers to code in native C language using the Polygeist front-end, it still requires programming in a specific language and does not support e.g. standard SQL queries. Furthermore, HEIR focuses on transforming plaintext programs into HE-friendly dialects but does not optimize mixed Boolean and arithmetic operations in the context of e.g. SQL queries. While HEIR addresses operator incompatibility and ciphertext-operator compatibility, it does not optimize the assignment of operations to HE schemes using techniques like ILP. Despite improvements, HEIR may still present challenges for developers not familiar with HE cryptography or compiler design.

In today's digital landscape, organizations face significant challenges in processing sensitive data securely. Protecting data during computation is not just important in light of Regulations like GDPR and concerns over data privacy. Given the increasing interconnection between digital and conventional technical systems, protecting data during computation is also important to ensure technical integrity of such interconnected technical systems.

While HE offers the ability to perform computations on encrypted data without exposing plaintext, existing solutions are hindered by several limitations:
- Current HE frameworks require manual conversion of high-level queries into HE-compatible code, necessitating cryptographic expertise and significant development time.
- There is an absence of systems that fully automate the translation from e.g. standard SQL queries to HE code, in particular, to optimized hybrid HE code, requiring coding in specific languages and/or limiting accessibility for developers.
- Existing systems are not optimized for computations that involve both Boolean and arithmetic operations (mixed domain HE), leading to suboptimal performance, leading to inefficiencies in mixed operations.
- Manual and inefficient processes hinder the ability to scale secure computations over large datasets.
- Existing compilers focus on MPC or require domain-specific languages and do not provide an optimized, fully automated solution for translating SQL queries into HE code in a hybrid HE environment. Absence of optimized, automated translation of complex SQL queries into hybrid HE code hinders performance and scalability.

### Disclosure

A first general aspect pertains to a computer-implemented method for generating a homomorphic encryption code of a query. The method comprises identifying at least one first operation in the query. The method further comprises assigning a first homomorphic encryption scheme to the at least one first operation based on an optimization of a total computational cost of executing the homomorphic encryption code to be generated, wherein the first homomorphic encryption scheme is chosen to be either a Boolean homomorphic encryption scheme or an arithmetic homomorphic encryption scheme or one of one or more further homomorphic encryption schemes. The method further comprises generating, using a homomorphic encryption framework, the homomorphic encryption code of the query based on assigning the first homomorphic encryption scheme.

A second general aspect pertains to a computer system configured to execute the method for generating a homomorphic encryption code of a query according to the first general aspect (or an embodiment thereof).

A third general aspect pertains to a computer program or signal, wherein the computer program or signal is configured to execute the method for generating a homomorphic encryption code of a query according to the first general aspect (or an embodiment thereof).

A fourth general aspect pertains to a computer-readable medium that stores and/or contains the computer program or the signal of the third general aspect (or an embodiment thereof).

For example, thanks to the method of the first general aspect (or an embodiment thereof) secure SQL query processing and data analytics using HE is made more accessible. Advantageously, using the method, standard SQL queries can be seamlessly translated into optimized HE code, enabling secure computation over encrypted data (possibly) in a hybrid HE environment that integrates both Boolean (e.g. TFHE) and arithmetic (e.g. CKKS) domains. By automating the entire process from e.g. an SQL query to HE code execution, the barrier for developers to utilize HE without requiring cryptographic expertise is significantly lowered. Furthermore, thanks to the method optimized performance and scalability in secure data processing and analytics is achieved.

The method has many advantages. In particular, the method introduces significant improvements over existing solutions including e.g. both versions of HEIR and Silph:
- The method may automate the entire process from e.g. SQL parsing to HE code execution, eliminating manual intervention and the need for cryptographic expertise. In particular, this overcomes a major barrier in existing systems, including HEIR and Silph, which do not support direct translation from SQL and generating optimized hybrid HE.
- In formulating the code generation and optimization process as an optimization problem the method our system efficiently assigns computations to the most suitable HE scheme (either Boolean or arithmetic), thereby minimizing execution time and resource consumption. In so doing, an optimized HE code that efficiently handles mixed-domain computations is generated. In other words, thanks to the method the performance and/or efficiency in processing complex queries are enhanced.

- The system leverages both Boolean and arithmetic HE schemes, optimizing performance by assigning operations to the most suitable domain. In other words, the method uniquely combines both Boolean (e.g., TFHE) and arithmetic (e.g., CKKS) HE schemes in a hybrid environment, optimizing computations based on the nature of the operations: e.g. Boolean HE for Non-Polynomial Operations (efficient handling of e.g. comparisons, logical operations and non-polynomial functions, which are common in e.g. SQL queries) and arithmetic HE for Polynomial Operations (e.g. optimized arithmetic computations like additions and multiplications).
- A protocol-agnostic HE Intermediate Representation that allows compatibility with various HE frameworks may be introduced enhancing flexibility and/or adaptability. Introducing a protocol-agnostic HE-IR allows compatibility with various HE frameworks, enhancing flexibility and adaptability. Unlike HEIR which is tied to specific IR dialects and may require program adjustments, an HE intermediate representation in embodiments of this method abstracts the underlying protocols, facilitating seamless integration and future extensibility.
- Advanced optimization techniques enable efficient processing of large datasets and complex queries, supporting and enhancing scalability in secure data processing. In particular, data processed homomorphically may be minimized by filtering and preprocessing data in plaintext where possible. Furthermore, batching techniques and SIMD operations may be used to enhance performance, fully leveraging the capabilities of HE schemes.
- Unlike conventional methods which require domain-specific languages or programming in specific formats, the method enables developers to use e.g. standard SQL queries, making it more accessible and reducing the learning curve. In fact, in embodiments of the method standard SQL queries may be accepted, eliminating the need for domain-specific languages or programming in languages like C. Again, this makes HE technologies more accessible to developers who are familiar with SQL, reducing the learning curve and promoting widespread adoption.
- Given the increasing interconnection between digital and conventional technical systems, the method ensures technical integrity of such interconnected technical systems.

### Short description of the figures

**Fig.** 1 schematically illustrates embodiments of a method for generating a homomorphic encryption code of a query.
**Fig.** 2 schematically illustrates embodiments of a sub-method for optimization of a total computational cost of executing the homomorphic encryption code to be generated.
**Fig.** 3 shows an example system architecture and workflow for homomorphic encryption code generation.
**Fig. 4** shows an example hybrid homomorphic encryption workflow for scheme assignment.
**Fig. 5** shows an example block diagram of a communication system for secure and privacy-preserving fleet management. An OEM performing a secure (SQL) query over a fleet of (autonomous) vehicles.

### Detailed description

Method 100 is directed to generating a homomorphic encryption (HE) code of a query. For example, in an automated process standard SQL queries are transformed into securely executed hybrid HE programs. Importantly, method 100 is designed to optimize the resulting code, thereby increasing the efficiency of executing the code.

There is disclosed a computer-implemented method 100 for generating a homomorphic encryption code of a query. Upon execution of this encryption code computations are performed on encrypted data without first having to decrypt it. The resulting computations are left in an encrypted form which, when decrypted, result in an output that is identical to that of the operations performed on the unencrypted data.

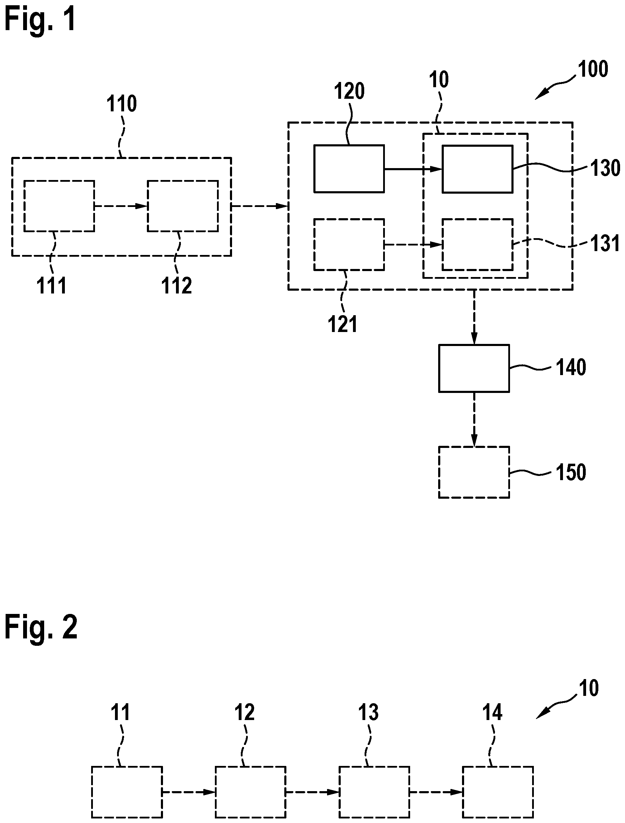

Method 100 comprises, as schematically illustrated in **Fig. 1****,** identifying 120 at least one first operation in the query. For example, operations in the query may comprise an addition operator, a multiplication operator and/or a comparison operator. The query may be an indication to receive a response from one or more databases comprising data. In particular, the query may be a database query such as e.g. an SQL query, wherein SQL stands for Structured Query Language. The response may be based on at least one part of the data. In particular, the response may be a computation result based on the at least one part of the data. The computation leading to the computation result may comprise one or more operations and, in particular, the first operation (and/or also the second operation introduced below).

Method 100 further comprises, as schematically illustrated in **Fig. 1****,** assigning 130 a first homomorphic encryption scheme to the at least one first operation based on an optimization 10 of a total computational cost of executing the homomorphic encryption code to be generated 140, wherein the first homomorphic encryption scheme is chosen to be either a Boolean homomorphic encryption scheme or an arithmetic homomorphic encryption scheme or one of one or more further homomorphic encryption schemes (different than Boolean or arithmetic homomorphic encryption schemes). The method may comprise assigning a homomorphic encryption scheme to each of the operations (comprising the at least one first operation and the at least one second operation introduced below) based on the optimization 10 of the total computational cost of executing the homomorphic encryption code to be generated 140, wherein each of the homomorphic encryption schemes is chosen to be either a Boolean homomorphic encryption scheme or an arithmetic homomorphic encryption scheme or one of one or more further homomorphic encryption schemes. For example, method 100 may comprise a choice per operation between a Boolean homomorphic encryption scheme or an arithmetic homomorphic encryption scheme and one or more further homomorphic encryption schemes (different than Boolean or arithmetic homomorphic encryption schemes). In embodiments, method 100 may comprise a choice per operation (just) between a Boolean homomorphic encryption scheme or an arithmetic homomorphic encryption scheme. In other words, in that case, one or more further homomorphic encryption schemes (different than Boolean or arithmetic homomorphic encryption schemes) may not be relevant.

A homomorphic encryption scheme allows us to compute a ciphertext from a set of ciphertexts such that the plaintext underlying the former is a function of the plaintexts underlying the latter. To do this, one party, called the client, generates a key pair (pk, sk) for the HE scheme and sends pk to the other party, called the server. To perform a secure computation, the client encrypts its data with pk and sends it to the server. Now the server can locally compute the ciphertext corresponding to the operation and return the encrypted result to the client. The client can now decrypt the received ciphertext using its private key sk. An additive HE allows us to generate the ciphertext corresponding to the sum of the underlying plaintexts by performing operations on the ciphertexts. An example Boolean homomorphic encryption scheme is TFHE. An example arithmetic homomorphic encryption scheme is CKKS.

Method 100 further comprises, as schematically illustrated in **Fig. 1****,** generating 140, using a homomorphic encryption framework, the homomorphic encryption code of the query based on assigning 130 the first homomorphic encryption scheme. For example, the homomorphic encryption framework may be one of HElib, SEAL and/or TFHE. In other words, in the generated 140 homomorphic encryption code the at least one first operation is implemented using the first homomorphic encryption scheme. Assigning a first homomorphic encryption scheme to the at least one first operation based on an optimization 10 of a total computational cost of executing the homomorphic encryption code to be generated 140, wherein the first homomorphic encryption scheme is chosen to be either a Boolean homomorphic encryption scheme or an arithmetic homomorphic encryption scheme or one of one or more further homomorphic encryption schemes, may comprise assigning either a Boolean homomorphic encryption or an arithmetic homomorphic encryption scheme or one of one or more further homomorphic encryption schemes to the at least one first operation. In other words, choosing between such alternatives may be part of method 100. The method may comprise generating the homomorphic encryption code of the query based on assigning the homomorphic encryption schemes (one for each of the operations). The optimization of the total computational cost of executing the homomorphic encryption code to be generated 140 may be such that assigning a homomorphic encryption scheme to each of the operations (comprising the at least one first operation and the at least one second operation introduced below) minimizes the total computational cost at least locally. In so doing, the homomorphic encryption code to be generated 140 can be executed 150 more efficiently.

As schematically illustrated as an option in **Fig. 1****,** method 100 may further comprise identifying 121 at least one second operation in the query. Furthermore, as also schematically illustrated as an option in **Fig. 1****,** method 100 may further comprise assigning 131 a second homomorphic encryption scheme to the at least one second operation based on the optimization 10 of the total computational cost of executing the homomorphic encryption code to be generated 140, wherein the second homomorphic encryption scheme is chosen to be either a Boolean homomorphic encryption scheme or an arithmetic homomorphic encryption scheme or one of one or more further homomorphic encryption schemes. Here, generating 140 the homomorphic encryption code of the query may be further based on assigning 131 the second homomorphic encryption scheme. In other words, in the generated 140 homomorphic encryption code the at least one second operation may be implemented using the second homomorphic encryption scheme.

The first homomorphic encryption scheme may be a Boolean homomorphic encryption scheme and the second homomorphic encryption scheme is an arithmetic homomorphic encryption scheme (or vice versa). Here, the generated 140 homomorphic encryption code may be hybrid in that it is based e.g. both on a Boolean homomorphic encryption scheme and an arithmetic homomorphic encryption scheme.

As schematically illustrated as an option in **Fig. 2****,** the optimization 10 of the total computational cost of executing the homomorphic encryption code to be generated 140 may comprise estimating 11 computational costs of each of a subset of operations in the query when assigned to a Boolean homomorphic encryption scheme; estimating 12 computational costs of each of the subset of the operations in the query when assigned to an arithmetic homomorphic encryption scheme; and defining 13, based on the estimated 11, 12 computational costs and/or overhead resulting from one or more conversions between Boolean and arithmetic homomorphic encryption schemes, an objective function representing the total computational cost. Furthermore, as also schematically illustrated as an option in **Fig. 2****,** the optimization 10 of the total computational cost of executing the homomorphic encryption code to be generated 140 may comprise minimizing 14 the objective function, thereby computing individual assignments of each of the operations either to a Boolean homomorphic encryption scheme or to an arithmetic homomorphic encryption scheme, in particular, thereby assigning 130, 131 the first homomorphic encryption scheme and/or the second homomorphic encryption scheme.

In embodiments where the first homomorphic encryption scheme and the second homomorphic encryption scheme are chosen from one of a Boolean homomorphic encryption scheme, an arithmetic homomorphic encryption scheme and one or more further homomorphic encryption schemes, the optimization 10 of the total computational cost of executing the homomorphic encryption code to be generated 140 may comprise estimating 11 computational costs of each of a subset of operations in the query when assigned to a Boolean homomorphic encryption scheme; estimating 12 computational costs of each of the subset of the operations in the query when assigned to an arithmetic homomorphic encryption scheme; estimating computational costs of each of the subset of the operations in the query when assigned to one of the one or more further homomorphic encryption schemes; and defining 13, based on the estimated computational costs and/or overhead resulting from one or more conversions between Boolean and arithmetic and further homomorphic encryption schemes, an objective function representing the total computational cost. Furthermore, the optimization 10 of the total computational cost of executing the homomorphic encryption code to be generated may comprise minimizing 14 the objective function, thereby computing individual assignments of each of the operations either to a Boolean homomorphic encryption scheme or to an arithmetic homomorphic encryption scheme or to one of one or more further homomorphic encryption schemes, in particular, thereby assigning 130, 131 the first homomorphic encryption scheme and/or the second homomorphic encryption scheme.

In any case and advantageously, minimizing 14 the objective function may be based on an integer linear programming (ILP) solver.

Identifying 120 the at least one first operation in the query and/or assigning 130 the first homomorphic encryption scheme to the at least one first operation may be based on a homomorphic encryption intermediate representation of the query, wherein the homomorphic encryption intermediate representation of the query encodes the query and comprises at least one encrypt instruction and at least one decrypt instruction. Here, and as schematically illustrated as an option in **Fig. 1****,** method 100 may comprise translating 110 the query into the homomorphic encryption intermediate representation of the query.

Furthermore, identifying 121 the at least one second operation in the query and/or assigning 131 the second homomorphic encryption scheme to the at least one second operation may be also based on the homomorphic encryption intermediate representation of the query. The same may apply to further identifications of operations in the query and corresponding assignments to homomorphic encryption schemes.

The homomorphic encryption intermediate representation of the query may be a computation graph. Furthermore, optimization 10 of the total computational cost of executing the homomorphic encryption code to be generated 140 may be based on clustering subgraphs of the computation graph and applying the integer linear programming solver for each class of this clustering.

Advantageously, the homomorphic encryption intermediate representation may be agnostic to and/or independent of the homomorphic encryption framework. In other words, the homomorphic encryption intermediate representation may be universal and may be used for any homomorphic encryption framework.

Identifying 120 the at least one first operation in the query and/or assigning 130 the first homomorphic encryption scheme to the at least one first operation may be based on an intermediate representation of the query, wherein, for example, the intermediate representation of the query encodes the query in an optimized form. Here, and as schematically illustrated as an option in **Fig. 1****,** method 100 may comprise translating 111 the query into the intermediate representation of the query.

Furthermore, identifying 121 the at least one second operation in the query and/or assigning 131 the second homomorphic encryption scheme to the at least one second operation may be based on the intermediate representation of the query. The same may apply to further identifications of operations in the query and corresponding assignments to homomorphic encryption schemes.

Method 100 or translating 111 the query into the intermediate representation of the query may comprise parsing the query, in particular, parsing the SQL query. For example, parsing the query may comprise identifying columns to select, filter conditions, logical operators and/or grouping. Furthermore, one or more dictionaries may be used to translate string values in the database into integers because homomorphic encryption schemes may work more efficiently over integers.

Furthermore, the homomorphic encryption intermediate representation of the query may be based on the intermediate representation of the query. Here, and as schematically illustrated as an option in **Fig. 1****,** method 100 may comprise translating 112 the intermediate representation of the query into the homomorphic encryption intermediate representation of the query. The homomorphic encryption intermediate representation of the query may be further based on the optimization 10 of the total computational cost of executing the homomorphic encryption code to be generated.

As schematically illustrated as an option in **Fig. 1****,** method 100 of one of the preceding claims may comprise executing 150 the generated 140 homomorphic encryption code in a computation system comprising at least two computing units, wherein one of the at least two computing units is configured to send encrypted data to another of the at least two computing units. For example, the at least two computing units may be mechanically distant. In particular, one of the at least two computing units may be a computing unit inside of a vehicle and another of the at least two computing units may be a computing unit outside of the vehicle.

Furthermore, there is disclosed a computer system configured to execute method 100 for generating a homomorphic encryption code of a query according to one of the preceding claims. The computer system may comprise one or more computing units (e.g. one or more CPUs) and an electronic computer memory (e.g. RAM).

Furthermore, there is disclosed a computer program configured to execute the computer-implemented method 100 for generating a homomorphic encryption code of a query. For example, the computer program can be in an interpretable or compiled form. It can be loaded (even in parts) for execution, e.g. as a bit or byte sequence, into the electronic computer memory (e.g. RAM) of the computer system.

Furthermore, there is disclosed a signal configured to execute the computer-implemented method 100 for generating a homomorphic encryption code of a query. For example, the signal may be a bit sequence or a byte sequence.

Furthermore, a computer-readable medium that stores and/or contains the computer program or the signal is disclosed. The medium may, for example, include one of RAM, ROM, EPROM, HDD, SSD, ... on which the computer program or the signal is stored.

In what follows, further embodiments of method 100 are disclosed:
In an embodiment, method 100 may implement an automated workflow from an SQL query to secure execution. In particular, method 100 may comprise the following steps:
- SQL query parsing: Accepts standard SQL queries and parses them thereby identifying data requirements and/or operations (e.g. the at least one first operation).
- Optionally, data Extraction and/or preparation: Securely extracts relevant data, converting non-numeric data to numeric representations suitable for encryption.
- SQL intermediate representation (SQL-IR) as an example of the intermediate representation of the query: Transforms the parsed SQL query into an optimized intermediate representation, abstracting SQL specifics and preparing it for secure computation.
- HE Intermediate Representation (HE-IR) as an example of the homomorphic encryption intermediate representation of the query: Converts the SQL-IR into a protocol-agnostic HE-IR, representing the operations to be performed on encrypted data. Here, a computation graph analogous to IR graphs in Silph may be built.
- HE Code Generation and Compilation: Formulates the code generation as an optimization problem, similar to Silph's ILP approach but adapted for HE. Generates optimized HE code and compiles it using selected HE frameworks (e.g. TFHE, CKKS).
- Secure Execution: Executes the compiled HE code, performing computations on encrypted data without revealing plaintext.
- Result Handling: Decrypts and processes the encrypted results, converting them back to user-friendly formats, ensuring data privacy throughout the process.

Advanced partitioning/mutation strategies from Silph's methodology for HE may be adopted: call site similarity, graph partitioning, and ILP-based assignment. This ensures an optimal or near-optimal distribution of Boolean vs. arithmetic HE throughout the query plan.

The HE code generation process is a critical component where the system optimizes the assignment of operations to either Boolean or arithmetic HE schemes.

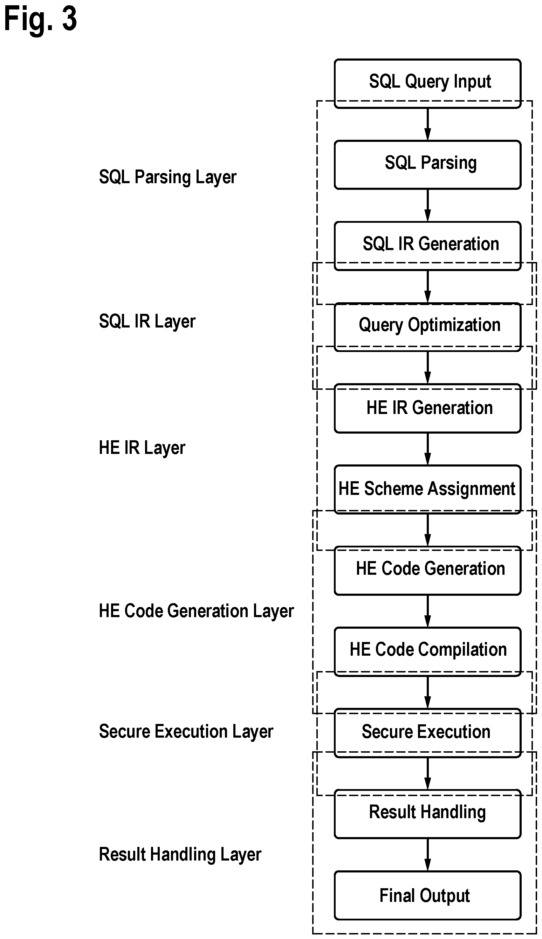

An example system architecture and workflow for HE code generation is shown in **Fig. 3****.**

Furthermore, the optimization problem may be formulated as follows:
- Objective: Minimize the total computational cost of executing the HE program (i.e. the homomorphic encryption code to be generated).
- Variables: Assignments of each operation e.g. in the HE-IR to either Boolean or arithmetic HE schemes.
- Constraints: Ensure compatibility between operations, manage the cost of conversions between HE schemes, and maintain correctness.

Furthermore, the optimization algorithm may involve:
- Cost Modeling: Estimate the computational cost of each operation under both HE schemes (Boolean and arithmetic), including the overhead of scheme conversions.
- Integer Linear Programming (ILP): Formulate the assignment problem as an ILP, where the objective function represents the total cost, and variables represent the assignment decisions.
- Solver Execution: Use an ILP solver to find the optimal assignment that minimizes the total cost.
- Result Interpretation: Apply the assignment decisions to the HE-IR, annotating each operation with the chosen HE scheme.

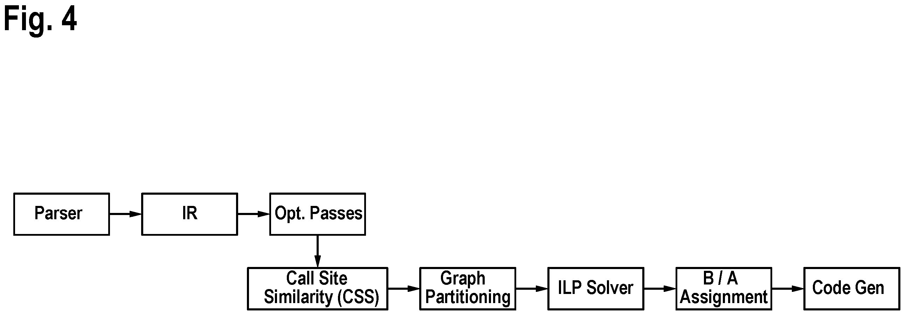

An example hybrid homomorphic encryption scheme assignment is shown in **Fig. 4****.** Therein e.g. an SQL query is parsed into an IR (the intermediate representation of the query), initial optimizations are applied and the IR graph is partitioned for cost-based assignment. Then, the hybrid HE code (the homomorphic encryption code to be generated) is generated:
- Parser and IR construction: The SQL query is parsed into an abstract IR representing operations (filter, join, group-by, etc.).
- Initial optimization passes: Reorder or combine certain operations to reduce cost in the HE setting (e.g., filter early).
- Call Site Similarity (CSS): Cluster repeated subgraphs (function calls or repeated query fragments) so only one ILP problem is solved for each unique subgraph structure.
- Graph Partitioning: Partition the IR into smaller subgraphs for more efficient ILP.
- ILP Solver: We assign each operation to Boolean or arithmetic HE, factoring in conversion costs.
- Protocol Assignment: ILP yields final domain assignments. These are unified across the IR graph.
- HE Code Generation: Insert domain-conversion gates only where needed, producing a single hybrid HE executable.

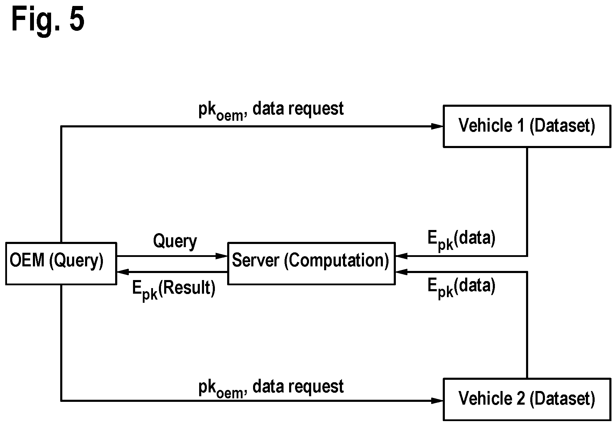

In what follows an example secure fleet management application is disclosed:
To illustrate the system's operation, consider an example application in the automotive industry. **Fig. 5** depicts the communication flow between an Original Equipment Manufacturer (OEM) performing e.g. an SQL query over a fleet of autonomous vehicles (as data providers) and the HE computing server executing the secure computation. This scenario demonstrates how the system securely processes SQL analytics over a fleet while keeping both the query and dataset confidential. Although the example uses two vehicles, the system scales to any number of participants.

For example, the OEM wants to determine the frequency of a specific component failure across different vehicle models in the fleet. Such an example SQL query may be:

```
 "SELECT vehicle_model, COUNT(failure_status) AS failure_count FROM fleet
 WHERE component = 'brake' AND failure_status = 1 GROUP BY
 vehicle_model;"
```

This query calculates how many times e.g. the brake component has failed in each vehicle model.

The system may operate as follows:
Function call and setup:
   - The OEM submits the SQL query and specifies HE parameters.
   - The query and parameters are passed to the system.
Argument parsing, wherein the query is parsed, identifying:
   - Columns to Select: vehicle_model, COUNT(failure_status);
   - Filter Conditions: component = 'brake', failure_status = 1;
   - Logical Operator: AND; and
   - Grouping: GROUP BY vehicle_model.
SQL intermediate representation (SQL-IR):
   - The query is transformed into an SQL Intermediate Representation (SQL IR), optimizing execution by applying filters before aggregation to reduce data processed in HE.
   - The SQL-IR represents the query in an intermediate form suitable for secure computation.
   - Non-numeric data, like 'brake', is mapped to numeric codes (e.g., 'brake' → 1).

### SQL-IR example:

```
 sql_ir = {
 "select": ["vehicle_model", " COUNT (failure_status) AS failure_count"],
 "from": "fleet",
 "where": [
        {"column": " component", " operator": "=", "value": 1},
        {"logical_operator": "AND"},
        {"column": "failure_status", "operator": "=", "value": 1}
 ],
 "group_by ": ["vehicle_model"]
 }
```

HE intermediate representation (HE-IR):
- The SQL-IR is converted into HE-IR, representing cryptographic operations.
- The system formulates an optimization problem to assign operations to either Boolean or arithmetic HE schemes.

HE-IR example:

```
 he_ir = {
 "encrypt": ["vehicle_model", "component", "failure_status"],
 "operations": [
        {"type": "comparison", "operator": "==", "operands": ["
               component_enc", "1"], "result": "component_match"},
        {"type": "comparison", "operator": "==", "operands": ["
               failure_status_enc", "1"], " result ": "failure_match"},
        {"type": "logical_and", "operands": ["component_match", "
               failure_match"], "result": "filter_mask"},
        {"type": "aggregation", "function": "COUNT", "operand": "
               failure_status_enc", "mask": "filter_mask", "group_by": "
               vehicle_model_enc", "result": "failure_count_enc"}
 ],
 "decrypt": ["failure_count_enc"]
 }
```

HE scheme assignment:
Boolean HE (TFHE) is assigned to:
   - Comparisons (==) for component and failure_status
   - Logical AND operation for filtering
Arithmetic HE (CKKS) is assigned to:
   - Aggregation function COUNT

Scheme conversion operations are added where necessary.

HE Code generation and compilation:
- The HE code is generated based on the HE-IR and scheme assignments.
- The code is compiled using the selected HE frameworks (e.g., TFHE for Boolean operations, CKKS in OpenFHE for arithmetic operations).

HE program execution:
- Each vehicle encrypts its data using the OEM's public key.
- Encrypted data is sent to the server.
- The server executes the HE program on the encrypted data without accessing plaintext.

Result handling:
- The encrypted result(failure_count_enc) is sent back to the OEM.
- The OEM decrypts the result using the private key.

Optional privacy filter:
- Additional privacy measures, such as differential privacy, can be applied to the result before decryption to protect individual vehicle data.

Query result:
- The OEM obtains the counts of brake failures per vehicle model.

Example output:
- Failure count for vehicle model A: 15
- Failure count for vehicle model B: 8
- Failure count for vehicle model C: 20

For illustration, below are simplified example code snippets representing key operations in the HE program:
Encryption of data (performed by vehicles):

```
 # Vehicle - side code
 vehicle_model_enc = HE_encrypt(vehicle_model, public_key)
 component_enc = HE_encrypt(component_code, public_key)
 failure_status_enc = HE_encrypt(failure_status, public_key)
```

```
 # Send encrypted data to server
 send_to_server ([ vehicle_model_enc, component_enc, failure_status_enc])
```

Server-side computation:

```
 # Server - side code
 # Receive encrypted data from vehicles
 data = receive_encrypted_data()
  
 # Perform comparisons using Boolean HE (TFHE)
 component_match = HE_equal(component_enc, HE_encrypt(1, public_key))
        # component_code for 'brake ' is 1
 failure_match = HE_equal(failure_status_enc, HE_encrypt(1, public_key))
  
 # Logical AND operation
 filter_mask = HE_and(component_match, failure_match)
  
 # Convert Boolean mask to arithmetic for aggregation if necessary
 filter_mask_arith = HE_convert_to_arithmetic(filter_mask)
  
 # Perform aggregation using Arithmetic HE (CKKS)
 failure_count_enc = HE_aggregate(filter_mask_arith, group_by =
 vehicle_model_enc)
 
```

Decryption of results (Performed by OEM):

```
# OEM - side code
 # Receive encrypted result from server
 failure_count_enc = receive_encrypted_result()
  
 # Decrypt the result
 failure_count = HE_decrypt(failure_count_enc, private_key)
  
 # Present the result
 print (failure_count)
```

While this example is simple, method 100 is designed to handle data from large fleets, supporting scalability in real-world automotive applications.

While demonstrated in the automotive industry, method 100 can be adapted for healthcare, finance and/or other sectors requiring secure data processing. In particular, method 100 allows to handle complex SQL queries securely and efficiently in a real-world scenario.

In fact, method 100 is versatile and applicable across a wide range of domains where secure data processing is required. By enabling e.g. standard SQL queries over encrypted data with optimized performance it addresses key challenges in data privacy and security. Below are some applications and use cases in various industries:
- Healthcare: Our system allows healthcare providers, researchers, and pharmaceutical companies to perform complex analytics on encrypted patient data without exposing personal health information.
- Finance: Our system enables banks, insurance companies, and investment firms to perform risk assessments, fraud detection, and customer analytics on encrypted financial data.
- Automotive: As detailed in our example, automotive manufacturers and fleet operators can leverage our system for secure fleet management and analytics. It allows for processing vehicle data to improve safety, efficiency, and maintenance scheduling without accessing raw data from individual vehicles.
- Cloud Services: Cloud service providers can offer secure computation services by integrating our system, allowing clients to perform computations over their encrypted data hosted in the cloud.
- Energy and Utilities: Companies in the energy sector can utilize our system to analyze consumption data securely, aiding in grid optimization and resource management.
- Telecommunications: Telecom operators can perform analytics on encrypted customer data to improve services and network performance while maintaining customer privacy.

## Claims

1. Computer-implemented method (100) for generating a homomorphic encryption code of a query, comprising:
- identifying (120) at least one first operation in the query;
- assigning (130) a first homomorphic encryption scheme to the at least one first operation based on an optimization (10) of a total computational cost of executing the homomorphic encryption code to be generated (140), wherein the first homomorphic encryption scheme is chosen to be either a Boolean homomorphic encryption scheme or an arithmetic homomorphic encryption scheme or one of one or more further homomorphic encryption schemes;
- generating (140), using a homomorphic encryption framework, the homomorphic encryption code of the query based on assigning (130) the first homomorphic encryption scheme.

2. The method (100) of claim 1, further comprising:
- identifying (121) at least one second operation in the query;
- assigning (131) a second homomorphic encryption scheme to the at least one second operation based on the optimization (10) of the total computational cost of executing the homomorphic encryption code to be generated (140), wherein the second homomorphic encryption scheme is chosen to be either a Boolean homomorphic encryption scheme or an arithmetic homomorphic encryption scheme or one of one or more further homomorphic encryption schemes;
wherein generating (140) the homomorphic encryption code of the query is further based on assigning (131) the second homomorphic encryption scheme.

3. The method (100) of claim 2, wherein the first homomorphic encryption scheme is a Boolean homomorphic encryption scheme and the second homomorphic encryption scheme is an arithmetic homomorphic encryption scheme.

4. The method (100) of one of the preceding claims, wherein the optimization (10) of the total computational cost of executing the homomorphic encryption code to be generated (140) comprises:
- estimating (11) computational costs of each of a subset of operations in the query when assigned to a Boolean homomorphic encryption scheme;
- estimating (12) computational costs of each of the subset of the operations in the query when assigned to an arithmetic homomorphic encryption scheme;
- defining (13), based on the estimated (11, 12) computational costs and/or overhead resulting from one or more conversions between Boolean and arithmetic homomorphic encryption schemes, an objective function representing the total computational cost;
- minimizing (14) the objective function, thereby computing individual assignments of each of the operations either to a Boolean homomorphic encryption scheme or to an arithmetic homomorphic encryption scheme, in particular, thereby assigning (130, 131) the first homomorphic encryption scheme and/or the second homomorphic encryption scheme.

5. The method (100) of claim 4, wherein minimizing (14) the objective function is based on an integer linear programming solver.

6. The method (100) of one of the preceding claims, wherein the query is a database query and, in particular, an SQL query.

7. The method (100) of one of the preceding claims, wherein identifying (120) the at least one first operation in the query and/or assigning (130) the first homomorphic encryption scheme to the at least one first operation are based on a homomorphic encryption intermediate representation of the query, wherein the homomorphic encryption intermediate representation of the query encodes the query and comprises at least one encrypt instruction and at least one decrypt instruction;
optionally, the method (100) comprising:
- translating (110) the query into the homomorphic encryption intermediate representation of the query.

8. The method (100) of claim 7, wherein the homomorphic encryption intermediate representation of the query is a computation graph.

9. The method (100) of claim 8, when dependent on claim 5, wherein the optimization (10) of the total computational cost of executing the homomorphic encryption code to be generated (140) is based on clustering subgraphs of the computation graph and applying the integer linear programming solver for each class of this clustering.

10. The method (100) of any of the claims 7 to 9, wherein the homomorphic encryption intermediate representation is agnostic to and/or independent of the homomorphic encryption framework.

11. The method (100) of one of the preceding claims, wherein identifying (120) the at least one first operation in the query and/or assigning (130) the first homomorphic encryption scheme to the at least one first operation are based on an intermediate representation of the query, wherein the intermediate representation of the query encodes the query in an optimized form; optionally, the method (100) comprising:
- translating (111) the query into the intermediate representation of the query.

12. The method (100) of claim 11, when dependent on one of the claims 7 to 10, wherein the homomorphic encryption intermediate representation of the query is based on the intermediate representation of the query;
optionally, the method (100) comprising:
- translating (112) the intermediate representation of the query into the homomorphic encryption intermediate representation of the query.

13. The method (100) of claim 12, wherein the homomorphic encryption intermediate representation of the query is further based on the optimization (10) of the total computational cost of executing the homomorphic encryption code to be generated (140).

14. The method (100) of one of the preceding claims, comprising:
- executing (150) the generated (140) homomorphic encryption code in a computation system comprising at least two computing units, wherein one of the at least two computing units is configured to send encrypted data to another of the at least two computing units.

15. The method (100) of claim 14, wherein the at least two computing units are mechanically distant, in particular, wherein one of the at least two computing units is a computing unit inside of a vehicle and another of the at least two computing units is a computing unit outside of the vehicle.
